# EUROPÄISCHE PATENTSCHRIFT

(11) **EP 4 283 416 B1**
(45) Veröffentlichungstag und Bekanntmachung des Hinweises auf die Patenterteilung: **09.07.2025**
(21) Anmeldenummer: 22175209.0
(22) Anmeldetag: 24.05.2022
(51) Int. Cl.: G05B 19/042

(54) **SICHERUNG VON DATEN BEI FELDGERÄTEN MITTELS EINES ZUSATZMODULS**
BAKCKUP OF DATA IN FIELD DEVICES USING A SUPPLEMENTARY MODULE
SAUVEGARDE DES DONNÉES DES APPAREILS DE TERRAIN AU MOYEN D'UN MODULE SUPPLÉMENTAIRE

(43) Veröffentlichungstag der Anmeldung: 29.11.2023
(73) Patentinhaber: VEGA Grieshaber KG, 77709 Wolfach (DE)
(72) Erfinder: HÖLL, Ralf, 79822 Titisee-Neustadt (DE); GARCIA, Juan, 77781 Biberach (DE)
(74) Vertreter: Maiwald GmbH

(56) Entgegenhaltungen:
- EP-A1- 3 070 554
- DE-A1- 102014 112 226
- US-A1- 2017 366 875

## Beschreibung

### Gebiet der Erfindung

Die Erfindung betrifft ein Zusatzmodul für ein Backup und Restore (Wiederherstellen) zu einer Cloud mittels eines Bedien- und Anzeigenmoduls. Insbesondere betrifft die vorliegende Erfindung ein Zusatzmodul zur Datensicherung für ein Feldgerät sowie ein entsprechendes Verfahren und ein entsprechendes Feldgerät.

### Hintergrund

Heutige Feldgeräte aus dem Bereich der Prozess- und/oder der Fabrikautomation, wie beispielsweise Sensoren für Füllstand, Grenzstand, Druck, Durchfluss, Temperatur, Analyse können drahtgebunden oder drahtlos an übergeordnete Systeme angebunden sein und mit diesen Systemen kommunizieren.

Bei den drahtgebundenen Feldgeräten handelt es sich typischerweise um Verbindungen nach 4 ... 20mA/HART, Profibus, Foundation Fieldbus (FF), oder Zwei-Draht-Ethernet, auch als APL-Technologie benannt. Profibus PA und Foundation Fieldbus (FF) ist ein volldigitales, serielles, bidirektionales Kommunikationssystem, das als Feldgerätebussystem in einer Anlagen- oder Prozessautomatisierungsumgebung dient. Profibus PA und FF basieren auf der IEC 61158-2 und sind Feldbussysteme für die Prozessautomation also 2-Leiter, mit rund 1000 m Reichweite und eigensicher im Sinne von Ex i, Schutzart Eigensicherheit (Ex i). Die Eigensicherheit (engl. Intrinsic safety) ist eine technische Eigenschaft eines Gerätes oder Systems, die aufgrund spezieller Konstruktionsprinzipien sicherstellt, dass selbst im Fehlerfall kein unsicherer Zustand auftritt.

Bei den drahtlosen Feldgeräten handelt es sich typischerweise um WirelessHart, LoRa, NBloT, Sigfox oder andere Drahtlos-Kommunikationsprotokolle, die über Bluetooth oder WLAN übertragen werden.

Bei den übergeordneten Systemen handelt es sich beispielsweise um eine speicherprogrammierbare Steuerung, SPS, englisch: programmable logic controller, PLC, Gateways, etwa LoRa, (engl. für Long Range), oder serverbasierte Systeme, beispielsweise SCADA-Systeme.

Bei solchen Feldgeräten müssen Sicherungen und Wiederherstellungen, im Folgenden auch "Backup" bzw. "Restore" genannt, typischerweise durch angeschlossene Bediengeräte, wie beispielsweise PC, Laptop, Smartphone oder Tablet durchgeführt werden. Dies ist oft umständlich, das Anschließen von Geräten vor-Ort aufwendig (Mitnahme von Bediengeräte, Wartung der Bediengeräte, gegebenenfalls Kabelverbindungen, bei explosionsgefährdeten Anlagen ggf. das Erwirken eines Feuerscheines ...) und meistens mit Vor- und Nacharbeit verbunden (Backup von lokalem Laptop auf Server).

EP 3 070 554 A1 beschreibt ein Cloud-basiertes Backup für eine industrielle automatische Fabrik in der Cloud.

DE 10 2014 112 226 A1 beschreibt ein Verfahren zum Übertragen von Feldgerätedaten.

US 2017/0366875 A1 beschreibt ein Verfahren und eine Vorrichtung zur Automatisierung personalisierter Wartungsaufgaben mit einer eingebauten Simulation und Datensynchronisationssupport im Bereich der Industrie.

### Offenbarung der Erfindung

Die Erfindung offenbart Möglichkeiten der Sicherung und Wiederherstellung, bzw. Backup und Restore, von allgemeinen Daten wie z.B. Geräteparameter, Diagnosedaten oder Software-Update bei Feldgeräten aus dem Bereich der Prozess- oder Fabrikautomation durch ein Modul mit Funkkommunikation.

Gemäß einem ersten Aspekt der vorliegenden Erfindung wird ein Zusatzmodul zur Datensicherung für ein Feldgerät gemäß Anspruch 1 bereitgestellt, wobei das Zusatzmodul eine Koppelungseinrichtung umfasst, welche dazu ausgebildet ist, das Zusatzmodul mit dem Feldgerät zu koppeln.

Ferner umfasst das Zusatzmodul eine Datenschnittstelleneinrichtung, welche dazu ausgebildet ist, eine erste Datenübertragungsverbindung, in der Regel als Kontakt/Kabelverbindung ausgelegt, zwischen dem Feldgerät und dem Zusatzmodul bereitzustellen und eine zweite Datenübertragungsverbindung, in der Regel als drahtlose Kommunikationsschnittstelle, zwischen dem Zusatzmodul und einem Webserver bereitzustellen.

Ferner umfasst das Zusatzmodul eine Backupeinrichtung, welche dazu ausgebildet ist, die Backupdaten zur Datensicherung für ein Feldgerät auf dem Webserver (in der Regel als zentrale Datenspeicherung) unter der Verwendung der ersten Datenübertragungsverbindung und der zweiten Datenübertragungsverbindung zu speichern.

Vorteilhafte Ausgestaltungen sind Gegenstand der abhängigen Ansprüche sowie der nachfolgenden Beschreibung.

Bei dem aufgeführten Stand der Technik, werden die Anforderungen, und somit auch die Möglichkeiten, an die heutigen Feldgeräte immer größer. Die Feldgeräte haben dadurch beispielsweise mehr Parametrier- und vor allem auch umfangreichere Diagnosemöglichkeiten, aber auch die zunehmende Digitalisierung erfordert immer wieder eine Erhöhung der Sicherheit, so dass Software-Updates (funktional oder sicherheitsbedingt) in kürzeren Zyklen erforderlich sein könnten.

Für einen Betreiber einer Anlage bedeutet dies, dass auch der Aufwand für die Wartung und Pflege der Feldgeräte, wie oben in den Anwendungsfällen beschrieben, aber auch seiner Bediengeräte steigt.

Die vorteilhafte Lösung der Erfindung ist ein steckbares oder anschließbares Modul bzw. Zusatzmodul mit integrierter Funktechnologie, mit dem sehr einfach eine Backup- und Restore-Funktion von Feldgeräten automatisch, mittels eins cloudbasierten Systems (z.B. Webserver), durchgeführt werden kann. Ein weiterer Vorteil entsteht durch die zentrale Datenhaltung im cloudbasierten System.

Typischerweise handelt es sich dabei um drahtgebundene Feldgeräte mit 4... 20mA/HART, Profibus, Foundation Fieldbus (FF) oder Zwei-Draht-Ethernet (APL-Technologie) Schnittstelle. In der Regel geht es um Sensoren beispielsweise für Füllstand, Grenzstand, Druck, Durchfluss, Temperatur, Analyse oder weitere Messgrößen.

Die vorteilhafte Lösung der Erfindung ist ein steckbares oder anschließbares Modul bzw. Zusatzmodul mit Funktechnologie:
Das Zusatzmodul mit Funktechnologie kann gemäß einer Ausführungsform der vorliegenden Erfindung während des Betriebs des Feldgerätes auf dieses aufgesteckt oder angeschlossen werden. Das Aufstecken oder Anschließen stellt die Kommunikation vom Zusatzmodul zum Feldgerät her. Dies kann dabei beispielsweise gemäß einer Ausführungsform der vorliegenden Erfindung über eine Steckerverbindung, Schleifkontakte, optisch oder anderen kontakt- oder kontaktlose Technologien erfolgen. Das Zusatzmodul bekommt gemäß einer Ausführungsform der vorliegenden Erfindung die Energie dabei vom Feldgerät bzw. kann auch durch eine integrierte Batterie/Akku sichergestellt oder ergänzt werden.

Das Zusatzmodul kann gemäß einer Ausführungsform der vorliegenden Erfindung dabei als optische Schnittstelle zum Bediener eine Anzeige oder andere optische Signalisierungen wie z.B. LEDs oder Leuchtringe enthalten. Das Zusatzmodul hat mindestens eine Funktechnologie enthalten, wie z.B. Mobilfunk (LTE, NB-IoT), Low Power Wide Area Network (LoRa), Sigfox, drahtlose lokale Netzwerke (WLAN) oder andere dafür taugliche Funktechnologien, welche die Kommunikation zwischen dem Zusatzmodul und dem cloudbasierten, überlagerten System durchführt.

Das Zusatzmodul kann gemäß einer Ausführungsform der vorliegenden Erfindung als ein steckbare Anzeige- und Bedienmodul ausgeführt sein, etwa als ein PLICSCOM und ferner zur Messwertanzeige ausgebildet sein.

Das Zusatzmodul kann gemäß einer Ausführungsform der vorliegenden Erfindung eine weitere Funktechnologie enthalten, wie z.B. für Kurzstreckenfunk, beispielsweise Bluetooth, welche für ein optionales Bediengerät, etwa eine Parametrierung und Diagnose, genutzt werden kann. Weiterhin hat das Zusatzmodul gemäß einer Ausführungsform der vorliegenden Erfindung einen Wahlschalter für unterschiedliche Betriebsarten, wie Backup und Restore, der sowohl mechanisch oder auch intern als Funktionsbaustein ausgeführt sein kann.

Nachdem der Bediener das Zusatzmodul gesteckt hat, werden bei beiden Betriebsart Backup oder Restore, automatisch die Daten zwischen Feldgerät und cloudbasiertem System übertragen.

In der Betriebsart Backup werden alle Backupdaten vom Zusatzmodul aus dem Feldgerät ausgelesen und zum cloudbasierten System übertragen. In der Betriebsart Restore werden alle zuvor, für diesen Gerätetyp, eingestellten Restoredaten, z.B. letzte Parametrierdaten oder Software-Update, vom cloudbasierten System an das Zusatzmodul übertragen und von dort in das Feldgerät geschrieben. Die Vielzahl dieser Verfahrensschritte werden automatisch ohne das Zutun des Bedieners abgearbeitet.

Der Bediener wird durch die optische Anzeige auf dem Zusatzmodul informiert, wenn die Übertragung abgeschlossen ist sowie welche Funktionsrichtung (Backup oder Restore) eingestellt ist. Optional kann er auch auf seinem Bediengerät (z.B. Smartphone mit Bedien-APP) informiert werden, da dieses mit dem Zusatzmodul über Kurzstreckenfunk verbunden sein kann (z.B. Bluetooth).

Gemäß einer Ausführungsform der Erfindung ist vorgesehen, dass die Koppelungseinrichtung einen Steckverbinder aufweist, welcher dazu ausgebildet ist, mit dem Feldgerät durch Formschluss, durch Federkraft oder durch Verschrauben lösbar fixiert zu werden.

Gemäß einer Ausführungsform der Erfindung ist vorgesehen, dass das Zusatzmodul ferner eine Energieversorgungseinrichtung aufweist, welche dazu ausgebildet ist, eine Energieversorgung des Zusatzmoduls über das Feldgerät, vorzugsweise über ein drahtgebundenes Feldgerät mit 4...20mA-HART-Standard, und/oder über einen im Zusatzmodul integrierten elektrischen Energiespeicher bereitzustellen.

Gemäß einer Ausführungsform der Erfindung ist vorgesehen, dass das Zusatzmodul ferner eine Anzeigeneinrichtung aufweist, welche dazu ausgebildet ist, eine optische Datenanzeige oder eine Signalisierung an einen Bediener auszugeben.

Gemäß einer Ausführungsform der Erfindung ist vorgesehen, dass die Datenschnittstelleneinrichtung dazu ausgebildet ist, die erste Datenübertragungsverbindung und/oder die zweite Datenübertragungsverbindung per Mobilfunkstandard der ersten, zweiten oder dritten Generation, per Schmalband-Internet der Dinge, per Niedrigenergieweitverkehrnetz oder per drahtlosem lokalen Netzwerk bereitzustellen.

Gemäß einer Ausführungsform der Erfindung ist vorgesehen, dass die Datenschnittstelleneinrichtung dazu ausgebildet ist, per Kurzstrecken-Funktechnik eine dritte Datenübertragungsverbindung zwischen dem Zusatzmodul und einem Bediengerät bereitzustellen. Vorzugsweise ist diese ebenfalls drahtlos (z.B. via Bluetooth) ausgelegt.

Gemäß einer Ausführungsform der Erfindung ist vorgesehen, dass die Backupeinrichtung dazu ausgebildet ist, in einem Backup-modus die Backupdaten zur Datensicherung für das Feldgerät als einzelne Parameter, als Parameterblöcke für eine Linearisierung oder für Störsignalausblendungen, als Messwertspeicher, als Ereignisspeicher, als Schleppzeiger, als Konfigurationsdaten, als Feldgeräteinformationen, als Diagnosedaten, oder als Zertifikate zu speichern.

Gemäß der Erfindung ist vorgesehen, dass die Backupeinrichtung dazu ausgebildet ist, in einem Restore-modus die Backupdaten wieder an das Feldgerät als einzelne Parameter, als Parameterblöcke für eine Linearisierung oder für Störsignalausblendungen, als Messwertspeicher, als Ereignisspeicher, als Schleppzeiger, als Konfigurationsdaten, als Feldgeräteinformationen, als Diagnosedaten, oder als Zertifikate zurück zu kopieren.

Gemäß einer Ausführungsform der Erfindung ist vorgesehen, dass das Zusatzmodul ferner eine Eingabeeinrichtung aufweist, welche dazu ausgebildet ist, das Zusatzmodul zwischen Restore-modus und Backup-modus umzuschalten.

Gemäß einer Ausführungsform der Erfindung ist vorgesehen, dass die Koppelungseinrichtung dazu ausgebildet ist, das Feldgerät zu identifizieren und eine eindeutige Sensorkennung, vorzugsweise eine Seriennummer, ein Gerätetyp, ein Hersteller, oder ein Marker-Tag, für das Feldgerät bereitzustellen, wobei das Zusatzmodul dazu ausgebildet ist, die Backupdaten mit der eindeutigen Sensorkennung zu versehen.

Gemäß einer Ausführungsform der Erfindung ist vorgesehen, dass das Zusatzmodul dazu ausgebildet ist, die Backupdaten mit einem Zeitstempel zu versehen.

Gemäß einer Ausführungsform der Erfindung ist vorgesehen, dass das Zusatzmodul ferner einen Datenspeicher aufweist, welcher dazu ausgebildet ist, zusätzliche Wiederherstellungsdaten, vorzugsweise Softwaredaten in der Form eines Software-Updates mittels Zusatzmodul für Feldgeräte oder Zertifikate, abzuspeichern.

Gemäß einer Ausführungsform der Erfindung ist vorgesehen, dass das Zusatzmodul ferner eine Cloud-Schnittstelleneinrichtung aufweist, welche dazu ausgebildet ist, eine Verbindung zu cloudbasierten Systemen bereitzustellen, vorzugsweise zur Authentifizierung des Zusatzmoduls oder zur Nutzung des Zusatzmoduls über ein Bediengerät oder zur Bereitstellung einer Zweifaktorauthentifizierung.

Gemäß einem Aspekt der vorliegenden Erfindung wird ein Verfahren gemäß Anspruch 13 bereitgestellt.

Die vorliegende Erfindung ermöglicht, dass das Zusatzmodul vom Bediener Vor-Ort, während dem laufenden Betrieb, einfach ohne Zusatzmittel gesteckt oder angeschlossen werden kann.

Die vorliegende Erfindung ermöglicht, dass der Bediener benötigt keine spezielle Qualifizierung oder erweitertes Wissen für die Nutzung der Backup oder Restore Funktion Die vorliegende Erfindung ermöglicht, dass Bediengeräte, wie z.B. Laptop, Smartphone oder Tablet, für Backup oder Restore nicht erforderlich sind, die auch nicht gewartet, vor Ort getragen oder vorbereitet werden müssen. Für den explosionsgefährdeten Bereich entfallen zusätzliche Maßnahmen wie Erwirken eines Feuerscheins. Eine manuelle Nacharbeit, wie z.B. das Ablegen der Backupdaten ist nicht erforderlich.

Das Zusatzmodul mit Funk kann für alle Feldgeräte genutzt werden, welche diese Schnittstelle zum Zusatzmodul unterstützen. Es gibt eine zentrale Ablage derartiger Daten Somit sind die Daten nicht auf verschiedenen Bediengeräten gestreut. Die Nutzung moderner Infrastrukturen ist gewährleistet, dadurch zukunftssicher.

Die vorliegende Erfindung ermöglicht, dass immer alle Backupdaten automatisch in dem cloudbasierten System, zentral gesichert werden. In dem cloudbasierten System ist sofort das digitale Abbild der jeweiligen Feldgeräte verfügbar. Es können bei Bedarf mehrere Backups von einem Feldgerät durchgeführt werden. Es können bei Bedarf mehrere Backups von mehreren Feldgeräten hintereinander durchgeführt werden, ohne dass ein Speicher voll wird.

Bei einem Restore wird der Sensor automatisch in "Wartungsbetrieb" versetzt, so dass der Gesundheitszustand des Feldgerätes im Form einer Diagnosemeldung auch im übergeordneten System erkennbar ist.

Es werden immer die zuvor gewünschten und eingestellten Restoredaten automatisch in dem Feldgerät gespeichert. Es können mehrere Restore an mehreren Feldgeräten hintereinander durchgeführt werden, wie z.B. Software-Update. Durch einfaches Aufstecken erfolgt das Herunterladen der durch eindeutiger Kennung, richtigen Backupdaten.

In der Cloud können übersichtlich potentielle Schwachstellen der Feldgeräte dargestellt werden, wie z.B. bestimmte Feldgeräte, die noch nicht die neuesten Sicherheitsupdates erfahren haben. Verbindung zu anderen cloudbasierten Systemen, wie z.B. die Software-Datenbank des Herstellers x oder y inklusiver automatischer Synchronisation, kann gewährleistet werden. Es wird ein genereller Überblick über alle Feldgeräte in der Anlage und damit auch der Anlagenzustand geschaffen.

Die vorliegende Erfindung, aus dem Bereich der Prozess- oder Fabrikautomation, beschreibt eine einfache, sichere und automatische Möglichkeit einer Sicherung und Wiederherstellung (Backup und Restore) von allgemeinen Daten bei Feldgeräten durch ein Zusatzmodul mit Funk. Das Zusatzmodul kann dabei ohne besondere Kenntnisse des Anwenders auf das Feldgerät gesteckt oder angeschlossen werden.

Im Folgenden werden mit Verweis auf die Figuren weitere Ausführungsformen der Erfindung beschrieben. Werden in der folgenden Figurenbeschreibung dieselben Bezugszeichen verwendet, so bezeichnen diese gleiche oder ähnliche Elemente. Die Darstellungen in den Figuren sind schematisch und nicht maßstäblich.

Kurze Beschreibung der Figuren
Fig. 1 zeigt ein Zusatzmodul mit einer Vielzahl an Schnittstellen gemäß einer Ausführungsform der Erfindung.
Fig. 2 zeigt ein automatisches Backup mit Zusatzmodul gespeichert in der Cloud gemäß einer Ausführungsform der Erfindung.
Fig. 3 zeigt ein Backup mit Zusatzmodul automatisch gespeichert in der Cloud gemäß einer Ausführungsform der Erfindung.
Fig. 4 zeigt ein Restore mit Zusatzmodul automatisch aus der Cloud abgerufen gemäß einer Ausführungsform der Erfindung.
Fig. 5 zeigt ein Restore mit Zusatzmodul automatisch aus der Cloud abgerufen zusätzlich mit mindestens einer weiteren Cloud gemäß einer Ausführungsform der Erfindung.
Fig. 6 zeigt ein Restore mit Zusatzmodul via Smartphone mit Bluetooth als Auswahl, mit Datenaustausch automatisch aus der Cloud gemäß einer weiteren Ausführungsform der vorliegenden Erfindung.
Fig. 7 zeigt ein Restore mit Zusatzmodul via Smartphone Mobilfunk als Auswahl, mit Datenaustausch automatisch aus der Cloud gemäß einer weiteren Ausführungsform der vorliegenden Erfindung.
Fig. 8 zeigt ein Zusatzmodul gemäß einer weiteren Ausführungsform der vorliegenden Erfindung.

### Detaillierte Beschreibung von Ausführungsformen

Im Folgenden erfolgt eine Beschreibung von Ausführungsbeispielen gemäß Ausführungsformen der Erfindung.

Die Darstellungen in den Figuren sind schematisch und nicht maßstäblich.

Werden in der folgenden Figurenbeschreibung in verschiedenen Figuren die gleichen Bezugszeichen verwendet, so bezeichnen diese gleiche oder ähnliche Elemente. Gleiche oder ähnliche Elemente können aber auch durch unterschiedliche Bezugszeichen bezeichnet sein.

Gemäß einer weiteren Ausführungsform der vorliegenden Erfindung ist ein Zusatzmodul mit allen Schnittstellen implementiert.

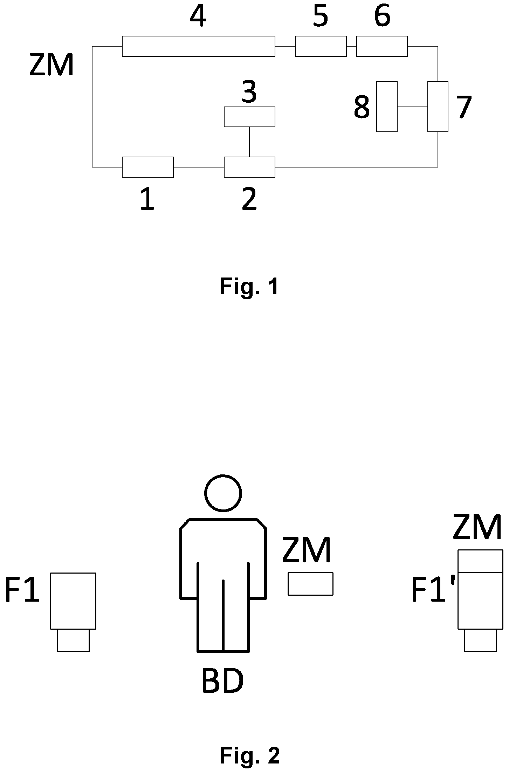

Die Figur 1 zeigt gemäß einer Ausführungsform der vorliegenden Erfindung schematisch das Zusatzmodul gemäß einer Ausführungsform der vorliegenden Erfindung, welches auf ein Feldgerät F aufgesteckt oder angeschlossen werden kann.

Gemäß einer Ausführungsform der vorliegenden Erfindung beinhaltet das Zusatzmodul folgende Elemente: eine Schnittstelle 1 zu einem Feldgerät, eine Spannungsversorgung 2 aus Feldgerät, eine optionale Batterie/Akku 3, eine optionale Signalisierung 4, eine zweite Funkverbindung 5 zu einer ersten Cloud, eine dritte Funkverbindung 6 zu einem optionalen Bediengerät, einen Wahlschalter 7 zum Wählen einer Betriebsart, einen Funktionsbaustein 8 zum Wählen einer Betriebsart.

Gemäß einer Ausführungsform der vorliegenden Erfindung ist der Funktionsbaustein 8 funktional alternativ zum Wahlschalter 7.

Gemäß einer Ausführungsform der vorliegenden Erfindung ist der Wahlschalter 7 funktional alternativ zum Funktionsbaustein 8

Gemäß einer weiteren Ausführungsform der vorliegenden Erfindung ist ein Backup mit Zusatzmodul automatisch und vollständig in die Cloud implementiert.

Die Figur 2 zeigt schematisch wie ein Bediener BD ein Zusatzmodul ZM auf ein Feldgerät F1 aufsteckt oder an F1' anschließt gemäß einer Ausführungsform der vorliegenden Erfindung.

Gemäß einer weiteren Ausführungsform der vorliegenden Erfindung ist ein Backup mit Zusatzmodul automatisch und vollständig in die Cloud implementiert.

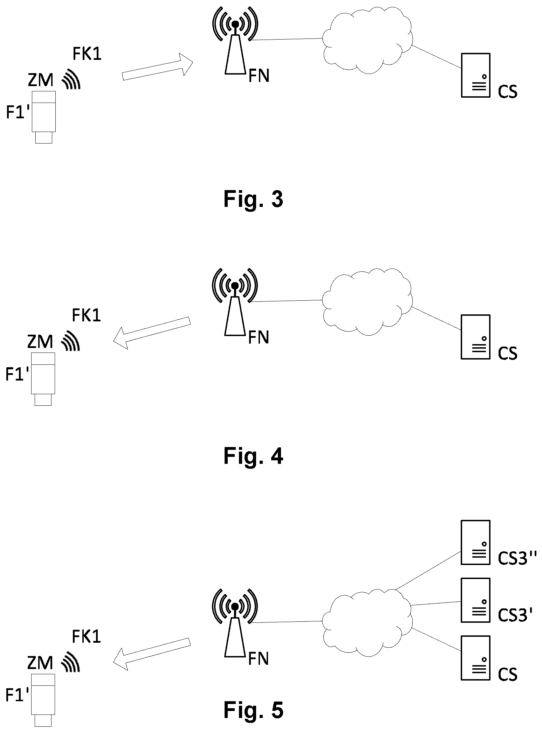

Die Figur 3 zeigt gemäß einer Ausführungsform der vorliegenden Erfindung schematisch ein Feldgerät F1' mit einem Zusatzmodul ZM, welches nach dem Aufstecken oder Anschließen über eine Funkkommunikation FK1 automatisch die Backupdaten über ein Funknetzwerk FN an das cloudbasierte System CS überträgt.

Gemäß einer weiteren Ausführungsform der vorliegenden Erfindung ist ein Restore mit Zusatzmodul automatisch und vollständig aus der Cloud implementiert.

Die Figur 4 zeigt gemäß einer Ausführungsform der vorliegenden Erfindung schematisch ein Feldgerät F1' mit einem Zusatzmodul ZM, welches nach dem Aufstecken oder Anschließen über eine Funkkommunikation FK1 automatisch die Restoredaten über ein Funknetzwerk FN von dem cloudbasierten System CS erhält.

Gemäß einer weiteren Ausführungsform der vorliegenden Erfindung ist ein Restore mit Zusatzmodul automatisch aus der Cloud zusätzlich mit mindestens einer weiteren Cloud implementiert.

Die Figur 5 zeigt gemäß einer Ausführungsform der vorliegenden Erfindung schematisch ein Feldgerät F1' mit einem Zusatzmodul ZM, welches nach dem Aufstecken oder Anschließen über eine Funkkommunikation FK1 automatisch die Restoredaten über ein Funknetzwerk FN von dem cloudbasierten System CS erhält. Zusatz zum Beispiel 4 sind 2 oder mehrere 3rd Party cloudbasierte Systeme CS3', CS3" verbunden, die zusätzliche Restoredaten bereitstellen, wie z.B. Software-Updates für die Feldgeräte F1'.

Gemäß einer weiteren Ausführungsform der vorliegenden Erfindung ist ein Restore mit Zusatzmodul via Smartphone mit Bluetooth als Auswahl automatisch aus der Cloud implementiert.

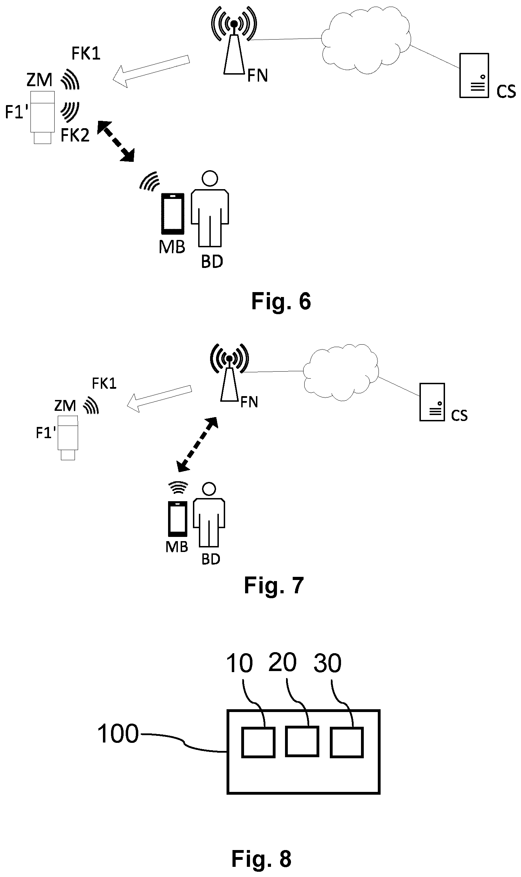

Die Figur 6 zeigt gemäß einer Ausführungsform der vorliegenden Erfindung schematisch ein Feldgerät F1' mit einem Zusatzmodul ZM, welches nach dem Aufstecken oder Anschließen über eine Funkkommunikation FK1 automatisch die Restoredaten über ein Funknetzwerk FN von dem cloudbasierten System CS erhält. Über eine zweite Funkkommunikation FK2 z.B. Bluetooth, welche mit dem mobilen Bediengerät MB des Bedieners BD verbunden ist, wählt der Bediener die Restoredaten explizit aus und bestätigt diese.

Gemäß einer weiteren Ausführungsform der vorliegenden Erfindung ist ein Restore mit Zusatzmodul via Smartphone Mobilfunk als Auswahl automatisch aus der Cloud implementiert.

Die Figur 7 zeigt gemäß einer Ausführungsform der vorliegenden Erfindung schematisch ein Feldgerät F1' mit einem Zusatzmodul ZM, welches nach dem Aufstecken oder Anschließen über eine Funkkommunikation FK1 automatisch die Restoredaten über ein Funknetzwerk FN von dem cloudbasierten System CS erhält. Über die mobile Funkkommunikation z.B. Mobilfunk des mobilen Bediengerät MB des Bedieners BD zum cloudbasierten System CS wählt der Bediener die Restoredaten explizit aus und bestätigt diese.

Die Figur 8 zeigt ein Zusatzmodul gemäß einer weiteren Ausführungsform der vorliegenden Erfindung.

Das Zusatzmodul 100 ist zur Datensicherung für ein Feldgerät ausgebildet, wobei das Zusatzmodul eine Koppelungseinrichtung 10, eine Datenschnittstelleneinrichtung 20, und eine Backupeinrichtung 30 umfasst.

### Bezugszeichenliste:

- F1: Feldgerät(e)
- F1': Feldgerät(e) mit Zusatzmodul
- ZM: Zusatzmodul
- 1: Schnittstelle zu Feldgerät
- 2: Spannungsversorgung aus Feldgerät
- 3: Optionale Batterie/Akku
- 4: Optionale Signalisierung
- 5: Funkverbindung zu Cloud
- 6: Funkverbindung zu optionalem Bediengerät
- 7: Wahlschalter Betriebsart
- 8: Funktionsbaustein Betriebsart
- BD: Bediener, Anwender
- FK1 ... FKn: Funkkommunikation
- FN: Funknetzwerk
- CS: Cloudbasiertes System
- CS3', CS3": 3rd Party cloudbasierte Systeme
- MB: Mobiles Bediengerät

Ergänzend sei darauf hingewiesen, dass "umfassend" und "aufweisend" keine anderen Elemente oder Schritte ausschließt und die unbestimmten Artikel "eine" oder "ein" keine Vielzahl ausschließen.

Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Zusatzmodul (100) zur Datensicherung für ein Feldgerät, wobei das Zusatzmodul umfasst:
- eine Koppelungseinrichtung (10), welche dazu ausgebildet ist, das Zusatzmodul mit dem Feldgerät zu koppeln, wobei das Zusatzmodul während des Betriebs des Feldgeräts auf das Feldgerät aufgesteckt oder daran angeschlossen werden kann;
- eine Datenschnittstelleneinrichtung (20), welche dazu ausgebildet ist, eine erste Datenübertragungsverbindung zwischen dem Feldgerät und dem Zusatzmodul bereitzustellen und eine zweite Datenübertragungsverbindung, bei der es sich um eine Funkkommunikation handelt, zwischen dem Zusatzmodul und einem cloudbasierten System bereitzustellen; und
- eine Backupeinrichtung (30), welche dazu ausgebildet ist, Backupdaten zur Datensicherung für das Feldgerät an das cloudbasierte System unter der Verwendung der ersten Datenübertragungsverbindung und der zweiten Datenübertragungsverbindung zu übertragen;
- **dadurch gekennzeichnet, dass**
die Backupeinrichtung (30) dazu ausgebildet ist, durch Aufstecken des Zusatzmoduls in einem Restore-Modus die Backupdaten wieder an das Feldgerät als einzelne Parameter, als Parameterblöcke für eine Linearisierung oder für Störsignalausblendungen, als Messwertspeicher, als Ereignisspeicher, als Schleppzeiger, als Konfigurationsdaten, als Feldgeräteinformationen, als Diagnosedaten, oder als Zertifikate zurückzukopieren.

2. Zusatzmodul gemäß Anspruch 1, wobei die Koppelungseinrichtung (10) einen Steckverbinder aufweist, welcher dazu ausgebildet ist, mit dem Feldgerät durch Formschluss, durch Federkraft oder durch Verschrauben lösbar fixiert zu werden.

3. Zusatzmodul gemäß Anspruch 1 oder 2, wobei das Zusatzmodul ferner eine Energieversorgungseinrichtung aufweist, welche dazu ausgebildet ist, eine Energieversorgung des Zusatzmoduls über das Feldgerät, vorzugsweise über ein drahtgebundenes Feldgerät mit 4...20mA-HART-Standard, und/oder über einen im Zusatzmodul integrierten elektrischen Energiespeicher bereitzustellen.

4. Zusatzmodul gemäß einem der vorhergehenden Ansprüche, wobei das Zusatzmodul ferner eine Anzeigeneinrichtung aufweist, welche dazu ausgebildet ist, eine optische Datenanzeige oder eine Signalisierung an einen Bediener auszugeben.

5. Zusatzmodul gemäß einem der vorhergehenden Ansprüche, wobei die Datenschnittstelleneinrichtung (20) dazu ausgebildet ist, die erste Datenübertragungsverbindung und/oder die zweite Datenübertragungsverbindung per Mobilfunkstandard der ersten, zweiten oder dritten Generation, per Schmalband-Internet der Dinge, per Niedrigenergieweitverkehrnetz oder per drahtlosem lokalen Netzwerk bereitzustellen.

6. Zusatzmodul gemäß einem der vorhergehenden Ansprüche, wobei die Datenschnittstelleneinrichtung (20) dazu ausgebildet ist, per Kurzstrecken-Funktechnik eine dritte Datenübertragungsverbindung zwischen dem Zusatzmodul und einem Bediengerät bereitzustellen.

7. Zusatzmodul gemäß einem der vorhergehenden Ansprüche, wobei die Backupeinrichtung (30) dazu ausgebildet ist, in einem Backup-modus die Backupdaten zur Datensicherung für das Feldgerät als einzelne Parameter, als Parameterblöcke für eine Linearisierung oder für Störsignalausblendungen, als Messwertspeicher, als Ereignisspeicher, als Schleppzeiger, als Konfigurationsdaten, als Feldgeräteinformationen, als Diagnosedaten, oder als Zertifikate zu speichern.

8. Zusatzmodul gemäß Anspruch 7 wobei das Zusatzmodul ferner eine Eingabeeinrichtung aufweist, welche dazu ausgebildet ist, das Zusatzmodul zwischen dem Restore-modus und dem Backup-modus umzuschalten.

9. Zusatzmodul gemäß einem der vorhergehenden Ansprüche, wobei die Koppelungseinrichtung (10) dazu ausgebildet ist, das Feldgerät zu identifizieren und eine eindeutige Sensorkennung, vorzugsweise eine Seriennummer, ein Gerätetyp, ein Hersteller, oder ein Marker-Tag, für das Feldgerät bereitzustellen, wobei das Zusatzmodul dazu ausgebildet ist, die Backupdaten mit der eindeutigen Sensorkennung zu versehen.

10. Zusatzmodul gemäß einem der vorhergehenden Ansprüche, wobei das Zusatzmodul dazu ausgebildet ist, die Backupdaten mit einem Zeitstempel zu versehen.

11. Zusatzmodul gemäß einem der vorhergehenden Ansprüche, wobei das Zusatzmodul ferner einen Datenspeicher aufweist, welcher dazu ausgebildet ist, zusätzliche Wiederherstellungsdaten, vorzugsweise Softwaredaten für Feldgeräte oder Zertifikate, abzuspeichern, und/oder, wobei das Zusatzmodul ferner eine Cloud-Schnittstelleneinrichtung aufweist, welche dazu ausgebildet ist, eine Verbindung zu cloudbasierten Systemen bereitzustellen, vorzugsweise zur Authentifizierung des Zusatzmoduls oder zur Nutzung des Zusatzmoduls über ein Bediengerät oder zur Bereitstellung einer Zweifaktorauthentifizierung.

12. Ein Feldgerät mit einem Zusatzmodul gemäß zumindest einem der vorhergehenden Patentansprüche 1 bis 11.

13. Verfahren zur Datensicherung für ein Feldgerät, wobei das Verfahren folgende Verfahrensschritte umfasst;
- Koppeln eines Zusatzmoduls mit dem Feldgerät, wobei das Zusatzmodul während des Betriebs des Feldgeräts auf das Feldgerät aufgesteckt oder daran angeschlossen wird;
- Bereitstellen einer ersten Datenübertragungsverbindung zwischen dem Feldgerät und dem Zusatzmodul und Bereitstellen einer zweiten Datenübertragungsverbindung, bei der es sich um eine Funkkommunikation handelt, zwischen dem Zusatzmodul und einem cloudbasierten System; und
- Übertragen von Backupdaten zur Datensicherung für das Feldgerät an das cloudbasierte System unter der Verwendung der ersten Datenübertragungsverbindung und der zweiten Datenübertragungsverbindung;
- durch Aufstecken des Zusatzmoduls Zurückkopieren der Backupdaten in einem Restore-Modus an das Feldgerät als einzelne Parameter, als Parameterblöcke für eine Linearisierung oder für Störsignalausblendungen, als Messwertspeicher, als Ereignisspeicher, als Schleppzeiger, als Konfigurationsdaten, als Feldgeräteinformationen, als Diagnosedaten, oder als Zertifikate.

## Claims

1. Add-on module (100) for data backup for a field device, wherein the add-on module comprises
- a coupling device (10) configured to couple the add-on module to the field device, wherein the add-on module can be plugged onto or connected to the field device during operation of the field device;
- data interface device (20) configured to provide a first data transmission connection between the field device and the add-on module and to provide a second data transmission connection, which is a radio communication, between the add-on module and a cloud-based system; and
- a backup device (30) configured to transmit backup data for data backup for the field device to the cloud-based system using the first data transmission connection and the second data transmission connection;
**characterised in that**
the backup device (30) is configured to copy the backup data back to the field device as individual parameters, as parameter blocks for linearisation or for interference signal suppression, as measured value memory, as event memory, as trailing pointers, as configuration data, as field device information, as diagnostic data or as certificates by plugging in the add-on module in a restore mode.

2. Add-on module according to claim 1, wherein the coupling device (10) comprises a plug connector configured to be detachably fixed to the field device by positive locking, by spring force or by screwing.

3. Add-on module according to claim 1 or 2, wherein the add-on module further comprises a power supply device configured to provide a power supply to the add-on module via the field device, preferably via a wired field device with 4..20mA HART standard, and/or via an electrical energy store integrated in the add-on module.

4. Add-on module according to any one of the preceding claims, wherein the add-on module further comprises a display device configured to output an optical data display or a signalling to an operator.

5. Add-on module according to any one of the preceding claims, wherein the data interface means (20) is configured to provide the first data transmission connection and/or the second data transmission connection via first, second or third generation mobile radio standard, via narrowband Internet of Things, via low power wide area network or via wireless local area network.

6. Add-on module according to any one of the preceding claims, wherein the data interface device (20) is configured to provide a third data transmission connection between the Add-on module and an operating device via short-range radio technology.

7. Add-on module according to any one of the preceding claims, wherein the backup device (30) is configured to store the backup data for data backup for the field device in a backup mode as individual parameters, as parameter blocks for linearisation or for interference signal suppression, as measured value memory, as event memory, as trailing pointer, as configuration data, as field device information, as diagnostic data, or as certificates.

8. Add-on module according to claim 7, wherein the add-on module further comprises an input device which is configured to switch the add-on module between the restore mode and the backup mode.

9. Add-on module according to any one of the preceding claims, wherein the coupling device (10) is configured to identify the field device and to provide a unique sensor identifier, preferably a serial number, a device type, a manufacturer or a marker tag, for the field device, wherein the add-on module is configured to provide the backup data with the unique sensor identifier.

10. Add-on module according to any one of the preceding claims, wherein the add-on module is configured to provide the backup data with a time stamp.

11. Add-on module according to any one of the preceding claims, wherein the add-on module further comprises a data storage configured to store add-on recovery data, preferably software data for field devices or certificates, and/or wherein the add-on module further comprises a cloud interface device which is configured to provide a connection to cloud-based systems, preferably for authenticating the add-on module or for using the add-on module via an operating device or for providing two-factor authentication.

12. Field device with an add-on module according to at least one of the preceding claims 1 to 11.

13. Method of data backup for a field device, the method comprising the following method steps;
- coupling an add-on module to the field device, wherein the add-on module is plugged onto or connected to the field device during operation of the field device;
- providing a first data transmission connection between the field device and the add-on module and providing a second data transmission connection, which is a radio communication, between the add-on module and a cloud-based system; and
- transmitting backup data for data backup for the field device to the cloud-based system using the first data transmission connection and the second data transmission connection;
- by plugging in the add-on module, copying the backup data back to the field device in a restore mode as individual parameters, as parameter blocks for linearisation or for interference signal suppression, as measured value memory, as event memory, as trailing pointers, as configuration data, as field device information, as diagnostic data, or as certificates.

## Revendications

1. Module d'extension (100) pour la sauvegarde de données pour un appareil de terrain, dans lequel le module d'extension comprend :
- un dispositif de couplage (10) qui est configuré pour coupler le module d'extension à l'appareil de terrain, dans lequel le module d'extension peut être enfiché sur l'appareil de terrain pendant le fonctionnement de l'appareil de terrain ou être raccordé à celui-ci ;
- un dispositif d'interface de données (20) qui est configuré pour fournir une première liaison de transmission de données entre l'appareil de terrain et le module d'extension, et pour fournir une deuxième liaison de transmission de données, qui est une communication radio, entre le module d'extension et un système en nuage ; et
- un dispositif de sauvegarde (30) qui est configuré pour transférer des données de sauvegarde pour la sauvegarde de données pour l'appareil de terrain au système en nuage en utilisant la première liaison de transmission de données et la deuxième liaison de transmission de données ;
- **caractérisé en ce que** le dispositif de sauvegarde (30) est configuré pour recopier, en enfichant le module d'extension dans un mode de restauration, les données de sauvegarde sur l'appareil de terrain sous forme de paramètres individuels, sous forme de blocs de paramètres pour une linéarisation ou pour des suppressions de signaux d'interférence, sous forme de mémoire de valeurs mesurées, sous forme de mémoire d'événements, sous forme de pointeur suiveur, sous forme de données de configuration, sous forme d'informations d'appareils de terrain, sous forme de données de diagnostic ou sous forme de certificats.

2. Module d'extension selon la revendication 1, dans lequel le dispositif de couplage (10) comporte un connecteur qui est configuré pour être fixé à l'appareil de terrain de manière détachable, par complémentarité de formes, par une force élastique ou par vissage.

3. Module d'extension selon la revendication 1 ou 2, dans lequel le module d'extension comporte en outre un dispositif d'alimentation en énergie qui est configuré pour assurer une alimentation en énergie du module d'extension par l'intermédiaire de l'appareil de terrain, de préférence par l'intermédiaire d'un appareil de terrain filaire avec la norme HART 4...20 mA et/ou par l'intermédiaire d'un accumulateur d'énergie électrique intégré dans le module d'extension.

4. Module d'extension selon l'une des revendications précédentes, dans lequel le module d'extension comporte en outre un dispositif d'affichage qui est configuré pour fournir un affichage de données visuel ou une signalisation à un opérateur.

5. Module d'extension selon l'une des revendications précédentes, dans lequel le dispositif d'interface de données (20) est configuré pour fournir la première liaison de transmission de données et/ou la deuxième liaison de transmission de données par norme de radiocommunication mobile de première, deuxième ou troisième génération, par l'Internet des objets à bande étroite, par un réseau étendu à faible énergie ou par un réseau local sans fil.

6. Module d'extension selon l'une des revendications précédentes, dans lequel le dispositif d'interface de données (20) est configuré pour fournir une troisième liaison de transmission de données entre le module d'extension et un appareil de commande via une technologie radio à courte portée.

7. Module d'extension selon l'une des revendications précédentes, dans lequel le dispositif de sauvegarde (30) est configuré pour stocker, dans un mode de sauvegarde, les données de sauvegarde pour la sauvegarde de données pour l'appareil de terrain sous forme de paramètres individuels, sous forme de blocs de paramètres pour une linéarisation ou pour des suppressions de signaux d'interférence, sous forme de mémoire de valeurs mesurées, sous forme de mémoire d'événements, sous forme de pointeur suiveur, sous forme de données de configuration, sous forme d'informations d'appareils de terrain, sous forme de données de diagnostic ou sous forme de certificats.

8. Module d'extension selon la revendication 7, dans lequel le module d'extension comporte en outre un dispositif d'entrée qui est configuré pour faire basculer le module d'extension entre le mode de restauration et le mode de sauvegarde.

9. Module d'extension selon l'une des revendications précédentes, dans lequel le dispositif de couplage (10) est configuré pour identifier l'appareil de terrain et fournir un identifiant de capteur unique, de préférence un numéro de série, un type d'appareil, un fabricant ou une étiquette de marquage, pour l'appareil de terrain, dans lequel le module d'extension est configuré pour fournir les données de sauvegarde avec l'identifiant de capteur unique.

10. Module d'extension selon l'une des revendications précédentes, dans lequel le module d'extension est configuré pour fournir les données de sauvegarde avec un horodatage.

11. Module d'extension selon l'une des revendications précédentes, dans lequel le module d'extension comporte en outre une mémoire de données qui est configurée pour stocker des données de récupération supplémentaires, de préférence des données de logiciel pour des appareils de terrain ou des certificats, et/ou dans lequel le module d'extension comporte en outre un dispositif d'interface en nuage qui est configuré pour établir une connexion à des systèmes en nuage, de préférence pour l'authentification du module d'extension ou pour l'utilisation du module d'extension via un appareil de commande ou pour une authentification à deux facteurs.

12. Appareil de terrain comportant un module d'extension selon au moins l'une des revendications 1 à 11 précédentes.

13. Procédé de sauvegarde de données pour un appareil de terrain, dans lequel le procédé comprend les étapes suivantes :
- coupler un module d'extension avec l'appareil de terrain, dans lequel le module d'extension est enfiché sur l'appareil de terrain pendant le fonctionnement de l'appareil de terrain ou est raccordé à celui-ci ;
- fournir une première liaison de transmission de données entre l'appareil de terrain et le module d'extension et fournir une deuxième liaison de transmission de données, qui est une communication radio, entre le module d'extension et un système en nuage ; et
- transférer des données de sauvegarde pour la sauvegarde de données pour l'appareil de terrain au système en nuage en utilisant la première liaison de transmission de données et la deuxième liaison de transmission de données ;
- en enfichant le module d'extension, recopier les données de sauvegarde dans un mode de restauration sur l'appareil de terrain sous forme de paramètres individuels, sous forme de blocs de paramètres pour une linéarisation ou pour des suppressions de signaux d'interférence, sous forme de mémoire de valeurs mesurées, sous forme de mémoire d'événements, sous forme de pointeur suiveur, sous forme de données de configuration, sous forme d'informations d'appareils de terrain, sous forme de données de diagnostic ou sous forme de certificats.
